# EUROPEAN PATENT SPECIFICATION

(11) **EP 2 761 062 B1**
(45) Date of publication and mention of the grant of the patent: **14.04.2021**
(21) Application number: 12837086.3
(22) Date of filing: 25.09.2012
(51) Int. Cl.: C25D 11/02, B23K 26/00

(54) **LASER TEXTURIZING AND ANODIZATION SURFACE TREATMENT**
STRUKTURIERUNG MITTELS LASER UND ANODISIERENDE OBERFLÄCHENBEHANDLUNG
TRAITEMENT DE SURFACE PAR ANODISATION ET TEXTURATION LASER

(30) Priority: 30.09.2011 US 201113250588
(43) Date of publication of application: 06.08.2014
(73) Proprietor: Apple Inc., Cupertino CA 95014 (US)
(72) Inventor: HANKEY, Evans, Cupertino, CA 95014 (US); NASHNER, Michael, S., Cupertino, CA 95014 (US); RUSSELL-CLARKE, Peter, Cupertino, CA 95014 (US)
(74) Representative: Worthington, Richard Easton
(86) International application number: PCT/US2012/057150
(87) International publication number: WO 2013/049081

(56) References cited:
- EP-A1- 2 302 106
- JP-A- S6 220 898
- JP-A- H06 256 993
- US-A- 5 166 093
- US-A- 6 143 375
- US-A1- 2004 065 346
- US-A1- 2006 049 141
- US-A1- 2008 156 057
- US-A1- 2010 051 467
- US-A1- 2010 219 506
- HIMENDRA JHA ET AL: "Microfabrication of an anodic oxide film by anodizing laser-textured aluminium", JOURNAL OF MICROMECHANICS & MICROENGINEERING, INSTITUTE OF PHYSICS PUBLISHING, BRISTOL, GB, vol. 17, no. 10, 1 October 2007 (2007-10-01), pages 1949-1955, XP020119930, ISSN: 0960-1317, DOI: 10.1088/0960-1317/17/10/004

## Description

### BACKGROUND

### Field

The present invention relates to treatments for a surface of an article and an article with such a treated surface. More particularly, the present invention relates to method according to claim 1 of performing a laser texturizing and anodization treatment on a metallic surface of an article and such article with a metallic surface according to claim 9 treated by laser texturing.

### Background

JP S62 20898 A describes that a complex pattern can be drawn on the surface of a valve metal by irradiating converged laser light on the surface of the valve metal before or after anodic oxidation while relatively moving the laser light or the valve metal in the horizontal direction.

JP H06 256993 A describes that characters, patterns, etc., can be entered into an ornamental surface to be anodized.

US 2006/049141 A1 describes a method of manufacturing a metal cover with blind holes. The method includes: preparing a metal substrate; covering the metal substrate with a protective film formed by electrophoretic deposition; forming holes in the protective film according to an intended pattern of the blind holes in the metal cover; etching the metal substrate in the exposed areas to form the blind holes; and removing a remainder of the protective film from the metal substrate. US 2008/156057 A1 describes a housing used in portable electronic devices which includes gripping portions bounded by grooving created in a surface of the housing.

HIMENDRA JHA ET AL: "Microfabrication of an anodic oxide film by anodizing laser-textured aluminum", describes a method for the fabrication of microstructures of an aluminum anodic oxide film by anodizing laser-textured aluminum.

EP2302106 A1 describes a metal surface treated to have a distinct cosmetic appearance such as an integral layer that is glossy may be used in electronic devices. The surface treatment may include polishing a metal surface, texturing the polished metal surface, polishing the textured surface, followed by anodizing the surface, and then polishing the anodized surface.

US2010051467 A1 describes a process for surface treating aluminum and aluminum alloy articles is provided. The method includes the steps of providing a substrate of aluminum or aluminum alloy material, the substrate having an internal surface and an external surface; and machining the external surface of substrate.

Many products in the commercial and consumer industries are metal articles, or contain metal surfaces. Metal surfaces are often treated by any number of processes to create one or more desired functional, tactile, cosmetic, or other effects. In one such process, a surface may be texturized to roughen the surface, shape the surface, remove surface contaminants, or other effects. This texturizing process may be accomplished via one or more mechanical processes such as by machining, brushing, or abrasive blasting. Abrasive blasting, for example, involves forcibly propelling a stream of abrasive material, such as beads, sand, and/or glass, against a surface. Alternatively, a surface may be texturized through a chemical process, such as chemical etching. This process often involves the use of an etching solution, such as a sodium hydroxide (NaOH) solution.

In one embodiment, a method includes the steps of providing an article having a metallic surface, texturizing the surface using a laser to create a controlled pattern across the surface, anodizing the surface. The texturizing step may be performed by moving the laser relative to the surface along a predetermined path and pulsing the laser at an interval to create a series of pits. In one embodiment, the controlled pattern includes the series of pits etched in a predetermined repeating pattern across the surface. This repeating pattern may be in the form of a two-dimensional array of substantially uniformly spaced pits. In another embodiment, the repeating pattern may be in the form of a two-dimensional grid including a series of substantially perpendicular lines created by overlapping pits.

Alternatively, the controlled pattern may include a series of pits etched in a predetermined pseudo-random pattern across the surface. This pseudo-random pattern may approximate the appearance of bead or sand blasting while providing greater control of the pattern and area of blasting.

Additional features of the invention will be set forth in the description that follows. Both the foregoing general description and the following detailed description are exemplary and explanatory and are intended to provide further explanation of the invention as claimed.

### BRIEF DESCRIPTION OF THE FIGURES

The accompanying figures, which are incorporated herein, form part of the specification and illustrate exemplary embodiments of the present invention. Together with the description, the figures further serve to explain the principles of, and to enable a person skilled in the relevant art(s) to make and use the exemplary embodiments described herein.
FIG. 1 is a flowchart of an exemplary method of surface treatment, in accordance with one embodiment of the present invention.
FIG. 2 is an enlarged view of a portion of a surface after an exemplary laser texturizing step, in accordance with one embodiment of the present invention.
FIG. 3 is an enlarged view of an image showing a portion of a surface after an exemplary laser texturizing step, in accordance with one embodiment of the present invention.
FIG. 4 is an enlarged view of a portion of a surface after an exemplary laser texturizing step, in accordance with one embodiment of the present invention.
FIG. 5 is an enlarged view of an image showing a portion of a surface after an exemplary laser texturizing step, in accordance with one embodiment of the present invention.
FIG. 6 is an enlarged view of an image showing a portion of a surface after an exemplary laser texturizing step, in accordance with one embodiment of the present invention.
FIG. 7 is an enlarged view of a portion of a surface after an exemplary laser texturizing step, in accordance with one embodiment of the present invention.
FIG. 8 is an enlarged view of a portion of a surface after an exemplary laser texturizing step, in accordance with one embodiment of the present invention.
FIG. 9 is an enlarged view of a portion of a surface after an exemplary laser texturizing step, in accordance with one embodiment of the present invention.
FIG. 10 is an enlarged view of an image showing a portion of a surface after an exemplary laser texturizing step, in accordance with one embodiment of the present invention.
FIG. 11 is an enlarged view of a portion of a surface after an exemplary laser texturizing step, in accordance with one embodiment of the present invention.
FIG. 12 is a flowchart of an exemplary method of surface treatment, in accordance with one embodiment of the present invention.
FIG. 13 is a flowchart of an exemplary method of surface treatment, in accordance with one embodiment of the present invention.

### DETAILED DESCRIPTION

The following detailed description refers to the accompanying figures, which illustrate exemplary embodiments. Other embodiments are possible. Modifications may be made to the exemplary embodiments described herein without departing from the spirit and scope of the present invention. Therefore, the following detailed description is not meant to be limiting. The operation and behavior of the embodiments presented are described with the understanding that modifications and variations may be within the scope of the present invention.

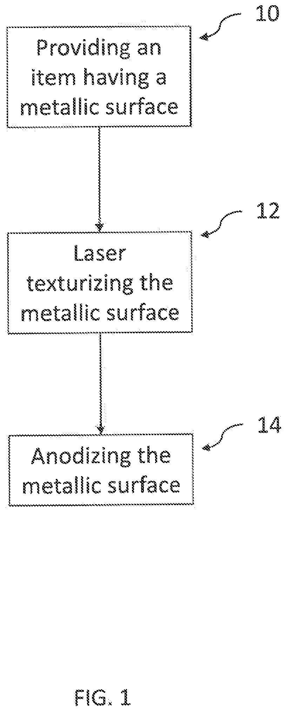

FIG. 1 is a high level flowchart of an exemplary method of surface treatment. The method may include a step 10 of providing a metal part having a surface. This method may be applied to a broad range of metal parts including, but not limited to, household appliances and cookware, such as pots and pans; automotive parts; athletic equipment, such as bikes; and electronic components, such as laptop computers and enclosures for electronic devices, such as media players, phones, and computers. In some embodiments, the method may be implemented on a media player or laptop computer manufactured by Apple Inc. of Cupertino, California.

Suitable metals include aluminum, titanium, magnesium, niobium and the like. The metal part may be formed using a variety of techniques, and may come in a variety of shapes, forms and materials. Examples of techniques include providing the metal part as a preformed sheet or extruding the metal part so that it is formed in a desired shape. In one example, the metal part may be extruded so that the metal part is formed in a desired shape. Extrusion may be a process for producing a desired shape in a continuous manner of indeterminate length so that the material may be subsequently cut to a desired length. In one embodiment, the metal part may be shape cast via any suitable casting process, such as die casting and permanent mold casting processes, among others. In one embodiment, the metal part may be formed from aluminum, such as extruded 6063 grade aluminum. In some embodiments, the metal part is made of an aluminum-nickel or aluminum-nickel-manganese casting alloy.

The method further includes a step 12 of performing a laser texturizing treatment on the surface of the metal part to create a controlled pattern across the surface. This step may result in one or more decorative, structural, functional, or other effects on the metallic surface. For example, the texturizing step may produce a desired tactile effect, reduce the appearance of minor surface defects, and/or reduce the appearance of fingerprints or smudges. In addition, the texturizing step may be used to create a series of small peaks and valleys. These peaks and valleys may impart a sparkling effect to the surface, which may in some instances make the surface appear brighter.

In one embodiment, step 12 is performed by moving a laser relative to the metallic surface along a predetermined path and pulsing the laser at an interval to create a series of pits. The interval may be a predetermined or not predetermined and may be periodic or non-periodic. The laser may be pulsed several times before moving its location. In addition, the laser may pass along the path several times. In one embodiment, the laser makes four passes along the path. In some embodiments, the laser may be moved relative to a stationary metallic surface, whereas in other embodiments, the metallic surface may be moved relative to a stationary laser.

In some embodiments, the laser is passed over the metallic surface but does not create pits in the surface. For example, the laser may be in the form of a steady beam rather than pulsed as described above. In some embodiments, the laser system is configured to reduce the effects of the laser such that the laser does not create pits in the metal surface. For example, the distance between the laser and the surface can be increased or the power of the laser can be decreased. In one embodiment, the laser merely melts a portion of the surface so that the surface has a different reflectivity than the remainder of the surface. The laser additionally changes the grain structure of the surface so that the anodization process is different in the laser-treated area.

One suitable laser for use with this method is the DP2UV laser marking system manufactured by FOBA Technology + Services GmbH of Ludenscheid, Germany. This system includes a Neodymium Doped Yttrium Orthvanadate (Nd:YVO4) diode pumped laser having a wavelength of 355 nm, an output power of 2 W, a pulse energy of 0.04 mJ, and a marking speed of up to 5000 mm/s. Other suitable lasers include a 20W Infrared fiber laser, an 18W infrared fiber laser, a 50W infrared YAG laser, a 20W infrared vanadate laser, and an 18W picosecond IR laser. The laser system may be electronically controlled via a computer numerical control machine along 3 or more axes as desired. In other embodiments, the laser is moved manually by a user. The laser system may include one or more galvanometers, such as a high speed mirror galvanometer, to control the position of the laser beam. In some embodiments, the laser is pointed perpendicular to the metallic surface, but may alternatively be pointed at an angle to the metallic surface if desired.

The pits created by the laser may be substantially circular in shape, with a diameter of approximately 20-25µm. The pits may be any other suitable shape, such as triangular, square, oval, or a non-geometric shape, such as a shark-tooth shape. The diameter and depth of the pits may be larger or smaller as desired and may depend on the characteristics of the laser system, such as the laser host, its pulse energy, duration, and number of passes over the surface. The size of the pits may also be affected by the characteristics of the metallic surface. In some embodiments, the surface may have some pits having a first diameter and depth, and some pits having a second, different, diameter and depth. This may be accomplished by changing the laser type or settings, or by making multiple passes over only a portion of the surface.

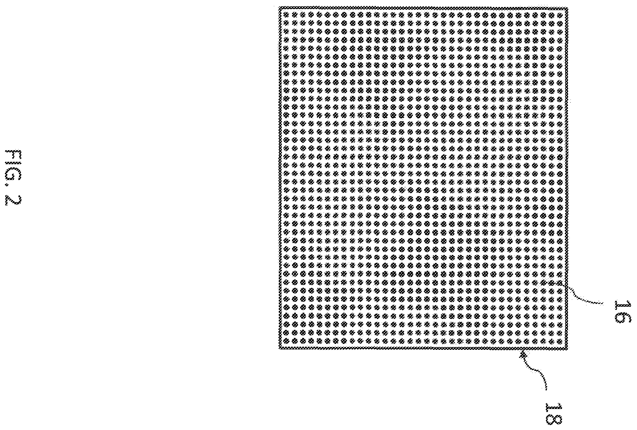

As described further below with respect to FIGs. 2-11, the controlled pattern may include a series of pits etched in a predetermined repeating or pseudo-random pattern across the surface. In some embodiments, the controlled pattern includes a repeating portion and a non-repeating portion. In some embodiments, the controlled pattern may cover only a portion of the metallic surface.

The method of FIG. 1 further includes a step 14 of performing an anodization process on the metallic surface. Anodizing a metal surface converts a portion of the metal surface into a metal oxide, thereby creating a metal oxide layer. Anodized metal surfaces provide increased corrosion resistance and wear resistance. Anodized metal surfaces may also be used to obtain a cosmetic effect, such as facilitating the absorption of dyes to impart a color to the anodized metal surface.

A standard anodization process may include placing the metal surface in an electrolytic bath having a temperature in a range between about 18 and 22 degrees Celsius. Hard anodization may be accomplished by placing the metal surface in an electrolytic bath having a temperature in a range between about 0 and 5 degrees Celsius.

In one embodiment, anodizing step 14 may create a transparent effect to the metal surface. In this embodiment, the metal surface may be placed in an electrolytic bath that has been optimized to increase the transparent effect of the oxide layer. The electrolytic bath may include sulfuric acid (H2SO4) in a concentration having a range between about 150 and 210 g/l, about 160 and 200 g/l, or about 170 and 190 g/l, or may be about 180 g/l. The electrolytic bath may also include metal ions that are the same as the metal surface. For, example, the electrolytic bath may include aluminum ions, in a concentration of about less than 15 g/l or in a range between about 4 and 10 g/l, about 5 and 9 g/l, or about 6 and 8 g/l, or may be about 7 g/l. Anodization may occur at a current density in a range between about 1.0 and 1.2 amperes per square decimeter. Anodization may have a duration in a range between about 30 and 60 minutes, about 35 and 55 minutes, or about 40 and 50 minutes, or may be about 45 minutes. The thickness of the oxide layer may be controlled in part by the duration of the anodization process.

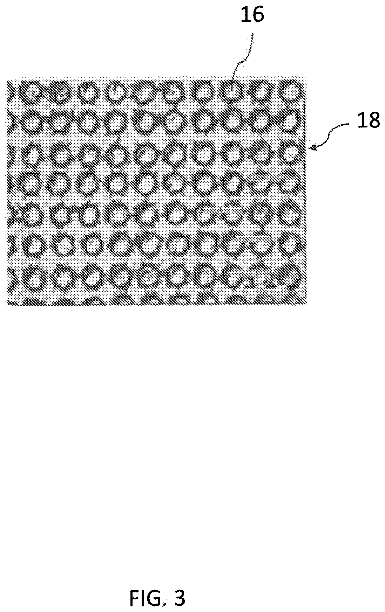

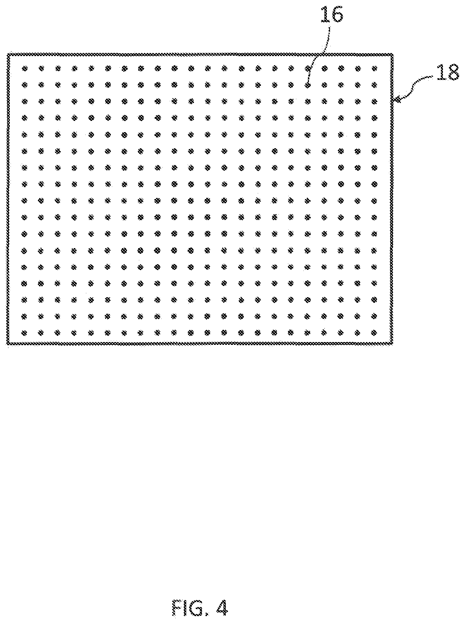

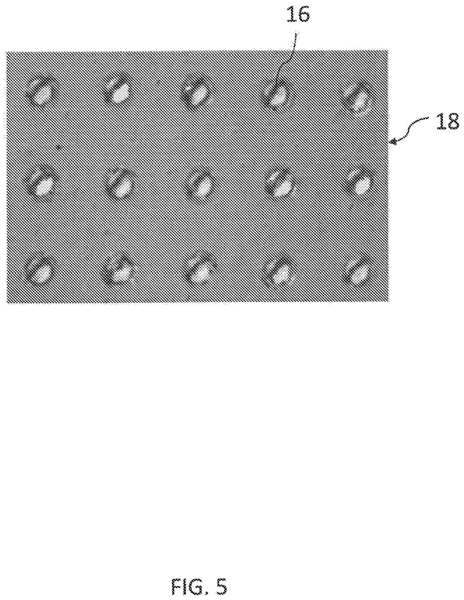

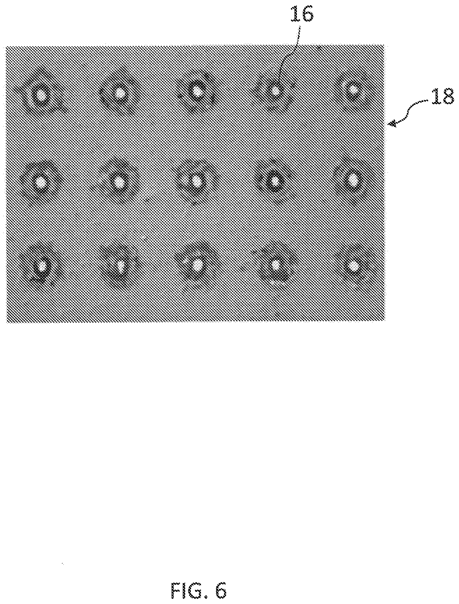

FIG. 2 is an enlarged view of a portion of a surface 18 after exemplary texturizing step 12. This texturizing step 12 may include using a laser to create a controlled pattern including a series of pits 16 etched in a predetermined repeating pattern across surface 18. In this embodiment, the predetermined repeating pattern is in the form of a two-dimensional array of substantially uniformly spaced pits 16 spaced approximately 50 µm apart. FIG. 3 shows an enlarged view of an image showing a portion of surface 18 including pits 16 in a controlled pattern similar to the pattern described above with respect to FIG. 2. FIG. 4 shows an enlarged view of a portion of surface 18 with a controlled pattern having greater spacing between pits 16 when compared to the pattern of FIGs. 2 and 3. FIGs. 5 and 6 each show an enlarged view of an image showing a portion of surface 18 including pits 16 in a controlled pattern similar to the pattern described above with respect to FIG. 4. FIG. 5 shows surface 18 after a single pass of a laser and FIG. 6 shows surface 18 after four passes of a laser.

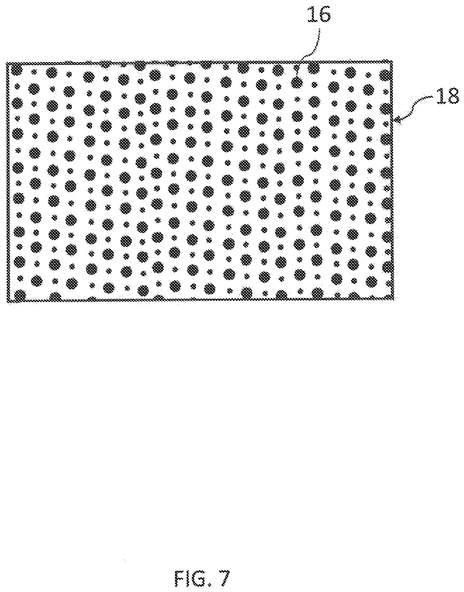

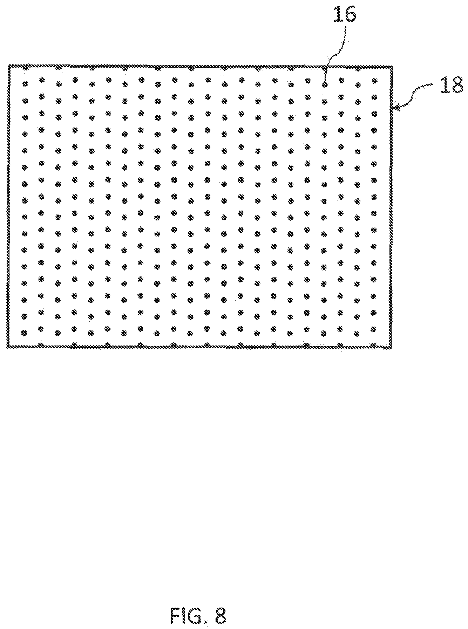

FIG. 7 shows an enlarged view of a portion of surface 18 with a pattern including pits 16 of varying sizes formed in columns offset from one another. In some embodiments, the pit depths are varied within the pattern. FIG. 8 shows an enlarged view of a portion of surface 18 with a repeating pattern including pits 16 formed in columns offset from one another.

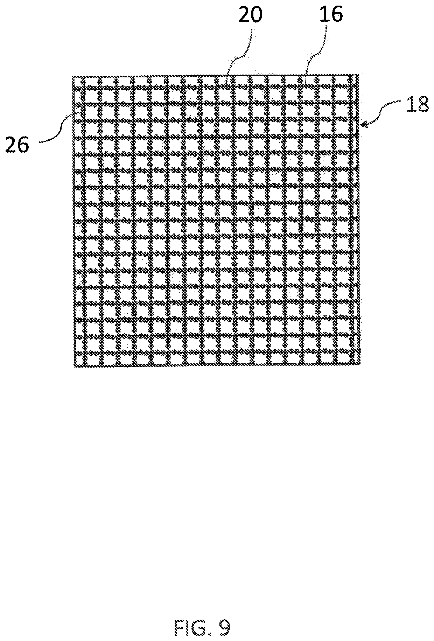

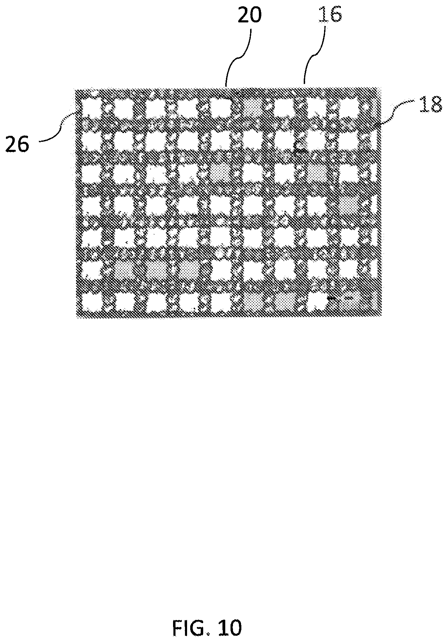

FIG. 9 is an enlarged view of a portion of surface 18 after an exemplary texturizing step 12. This texturizing step 12 may include having a controlled pattern including a series of substantially perpendicular horizontal lines 20 and vertical lines 26 created by overlapping pits 16. In one embodiment, horizontal lines 20 and vertical lines 26 are uniformly spaced approximately 100 µm apart. FIG. 10 shows an enlarged view of an image showing a portion of surface 18 including pits 16 in a controlled pattern similar to the pattern described above with respect to FIG. 9.

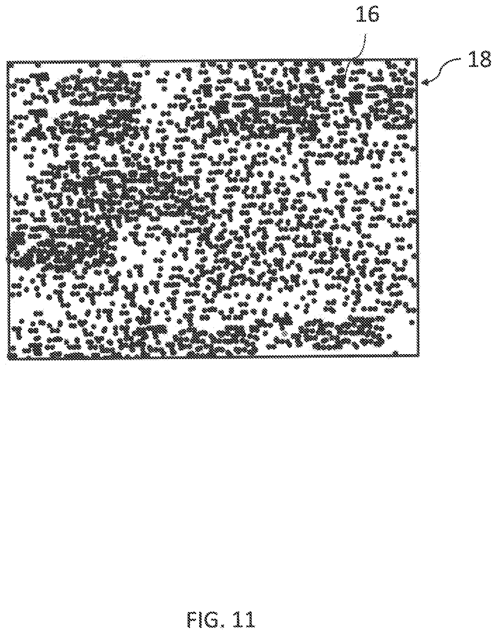

FIG. 11 is an enlarged view of a portion of surface 18 after an exemplary texturizing step. This texturizing step 12 may include having a controlled pattern including a series of pits 16 etched in a predetermined pseudo-random pattern across surface 18. As shown in FIG. 11, many of the pits overlap, but in alternative embodiments, the pits may be spaced apart. In one embodiment, the pseudo-random pattern may approximate the appearance of conventional abrasive blasting. In one embodiment, the pseudo-random pattern may include overlapping pits. In one embodiment, surface 18 is texturized using a laser as provided herein and is also texturized through conventional abrasive blasting and/or chemical etching. For example, surface 18 may first be texturized by forcibly propelling a stream of abrasive material, such as beads, sand, and/or glass, against surface 18. After this step is completed, surface 18 may then be laser texturized as provided herein to create a controlled pattern across surface 18. Alternatively, surface 18 may be laser texturized before being subjected to abrasive blasting..

In some embodiments, a first portion of a metal surface may be treated differently than a second portion of the metal surface in order to create different patterns and visual effects. For example, in one embodiment, the first portion of a metal surface may be treated using the laser texturizing process described herein, and the second portion may not be subject to a texturizing step. In another embodiment, the first portion and second portions of surface 18 may be treated by different techniques. For example, the first portion may be subjected to abrasive blasting or chemical etching and the second portion may be subject to the laser texturizing process described herein. In addition, the two portions may be treated to have different degrees of scratch or abrasion resistance as desired.

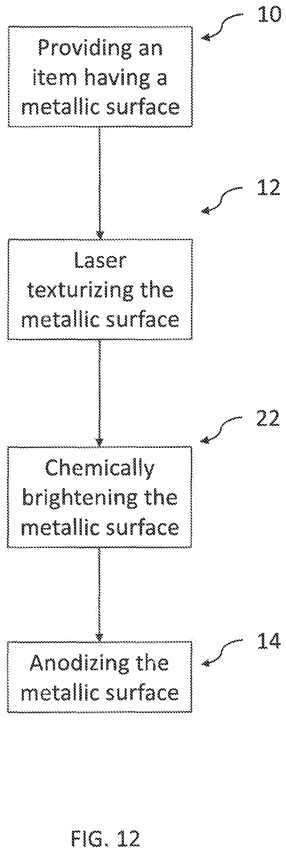

FIG. 12 is a high level flowchart of an exemplary method of surface treatment. The method includes the steps as described above of providing a metal part having a surface (step 10), performing a laser texturizing treatment on the surface of the metal part to create a controlled pattern across the surface (step 12), and performing an anodization process on the metallic surface (step 14). This method further includes the step 22 of chemically brightening the metallic surface.

In one embodiment, this chemical brightening step may be accomplished by exposing the surface to an acidic solution. Acids that may be used in the solution include, but are not limited to, phosphoric acid (H3PO4), nitric acid (HNO3), sulfuric acid (H2SO4), and any suitable combinations thereof. The acid may be phosphoric acid, a combination of phosphoric acid and nitric acid, a combination of phosphoric acid and sulfuric acid, or a suitable combination of phosphoric acid, nitric acid and sulfuric acid. Other ingredients may include copper sulfate (CuSO4) and water. In one embodiment, a solution of 85% phosphoric acid is utilized that is maintained at a temperature of 95 degrees Celsius. The processing time of chemical brightening step 22 may be adjusted depending upon a desired target gloss value. In one embodiment, the processing time may be in a range between about 40 and 60 seconds.

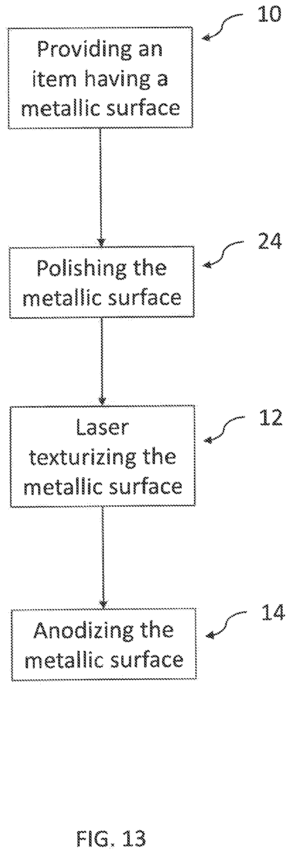

FIG. 13 is a high level flowchart of an exemplary method of surface treatment. The method includes the steps as described above of providing a metal part having a surface (step 10), performing a laser texturizing treatment on the surface of the metal part to create a controlled pattern across the surface (step 12), and performing an anodization process on the metallic surface (step 14). This method further includes the step 24 of polishing the metallic surface.

Polishing step 24 may be accomplished through any suitable polishing methods, such as buffing or tumbling. This step may be performed manually or with machine assistance. In one embodiment, the metal surface is polished via tumbling, which is involves placing the objecting in a tumbling barrel filled with a media and then rotating the barrel with the object inside it. Polishing step 24 may impart a smooth, glassy appearance to surface 18. For example, polishing step 24 may include tumbling the metal surface in a barrel for about 2 hours at a rotational speed of about 140 RPM. The barrel may be about 60% filled and the media may be crushed walnut shells mixed with a cutting media suspended in a lubricant, such as a cream.

Any of the above methods may include one or more further treatments on the metallic surface, such as rinsing, degreasing, de-smutting, dyeing, sealing, repeated polishing, texturizing, brightening, or anodization steps. For example, dyeing may generally refer to dipping or immersing a metal surface in a dye solution. Sealing may generally refer to immersing a metal surface in a sealing solution to close pores on a surface of the article. Polishing is generally described above, but it should be noted that similar or different polishing techniques may be used.

It is noted that the steps discussed above, illustrated in the flowcharts of FIGS. 1 and 8-9 are for illustrative purposes and are merely exemplary. Not every step need be performed and additional steps may be included as would be apparent to one of ordinary skill in the art to create a metallic surface having a desired effect. The steps may be reordered as desired. For example, step 24 of polishing the metallic surface may be performed before or after the texturizing step of step 24 as well as before or after the anodizing step of step 14.

In addition, the breadth and scope of the present invention should not be limited by any of the above-described exemplary embodiments, but should be defined only in accordance with the following claims.

## Claims

1. A method of treating a metallic surface of an article, the method comprising:
receiving the article, the metallic surface of the article having a first reflectivity;
forming a textured surface that includes a melted portion and a non-melted portion by using a laser to melt a portion of the metallic surface, wherein the melted portion includes a controlled pattern of pits and a second light reflectivity different than a first light reflectivity of the non-melted portion, wherein the non-melted portion has a first grain structure and the melted portion has a second grain structure different that the first grain structure; and
forming an anodization layer that overlays the melted portion and the non-melted portion, wherein the anodization layer is substantially transparent such that the textured surface is visible through an external surface of the anodization layer, and the anodization layer includes (i) a first anodization layer portion that is formed from the first grain structure and overlays the non-melted portion, and (ii) a second anodization layer portion that is formed from the second grain structure and overlays the melted portion.

2. The method of claim 1, wherein, prior to forming the textured surface, the method further comprises:
blasting the metallic surface by propelling a stream of abrasive material against the metallic surface.

3. The method of claim 2, wherein the controlled pattern of pits are in a repeating pattern.

4. The method of claim 1, wherein, subsequent to forming the anodization layer, the method further comprises:
polishing an external surface of the anodization layer.

5. The method of claim 1, wherein forming the textured surface includes using the laser along only a portion of the metallic surface.

6. The method of claim 1, wherein the pits are uniformly distributed from each other.

7. The method of claim 1, further comprising brightening the textured surface by performing a chemical brightening operation prior to forming the anodization layer.

8. The method of claim 1, wherein the pits have diameters between 20 micrometers and 25 micrometers.

9. An electronic device having an enclosure, the enclosure comprising:
a metal substrate having a textured surface that includes (i) a melted portion having a first light reflectivity, and (ii) a non-melted portion having a second light reflectivity different than the first light reflectivity, wherein the melted portion, created by directing a laser at the metal substrate, has a first grain structure and the non-melted portion has a second grain structure different than the first grain structure; and
an anodization layer that overlays the textured surface of the metal substrate, wherein the anodization layer has a polished surface, and the anodization layer includes a first anodization layer portion that overlays the melted portion and is formed from the first grain structure, and a second anodization layer portion that overlays the non-melted portion and is formed from the second grain structure.

10. The electronic device of claim 9, wherein the anodization layer is sufficiently transparent such that the textured surface is visible through the polished surface.

11. The electronic device of claim 10, wherein the melted portion includes a pattern of a series of pits.

12. The electronic device of claim 11, wherein the series of pits are etched in a pattern across the melted portion.

## Patentansprüche

1. Verfahren zum Behandeln einer metallischen Oberfläche eines Gegenstandes, das Verfahren umfassend:
Empfangen des Gegenstandes, wobei die metallische Oberfläche des Gegenstandes ein erstes Reflexionsvermögen aufweist;
Bilden einer strukturierten Oberfläche, die einen geschmolzenen Abschnitt und einen nicht-geschmolzenen Abschnitt beinhaltet, indem ein Laser verwendet wird, um einen Abschnitt der metallischen Oberfläche zu schmelzen, wobei der geschmolzene Abschnitt ein kontrolliertes Muster von Vertiefungen und ein zweites Lichtreflexionsvermögen beinhaltet, das sich von einem ersten Lichtreflexionsvermögen des nicht-geschmolzenen Abschnitts unterscheidet, wobei der nicht-geschmolzene Abschnitt eine erste Kornstruktur aufweist und der geschmolzene Abschnitt eine zweite Kornstruktur aufweist, die sich von der ersten Kornstruktur unterscheidet; und
Bilden einer Anodisierungsschicht, die den geschmolzenen Abschnitt und den nicht-geschmolzenen Abschnitt überlagert, wobei die Anodisierungsschicht im Wesentlichen transparent ist, so dass die strukturierte Oberfläche durch eine äußere Oberfläche der Anodisierungsschicht sichtbar ist, und die Anodisierungsschicht beinhaltet (i) einen ersten Anodisierungsschichtabschnitt, der aus der ersten Kornstruktur gebildet ist und den nicht-geschmolzenen Abschnitt überlagert, und (ii) einen zweiten Anodisierungsschichtabschnitt, der aus der zweiten Kornstruktur gebildet ist und den geschmolzenen Abschnitt überlagert.

2. Verfahren nach Anspruch 1, wobei das Verfahren vor dem Bilden der strukturierten Oberfläche ferner umfasst:
Bestrahlen der metallischen Oberfläche, indem ein Strom von abrasivem Material gegen die metallische Oberfläche getrieben wird.

3. Verfahren nach Anspruch 2, wobei das kontrollierte Muster von Vertiefungen in einem sich wiederholenden Muster vorliegt.

4. Verfahren nach Anspruch 1, wobei das Verfahren im Anschluss an das Bilden der Anodisierungsschicht ferner umfasst:
Polieren einer äußeren Oberfläche der Anodisierungsschicht.

5. Verfahren nach Anspruch 1, wobei das Bilden der strukturierten Oberfläche das Verwenden des Lasers nur entlang eines Abschnitts der metallischen Oberfläche beinhaltet.

6. Verfahren nach Anspruch 1, wobei die Vertiefungen gleichmäßig voneinander verteilt sind.

7. Verfahren nach Anspruch 1, ferner umfassend Aufhellen der strukturierten Oberfläche durch Ausführen eines chemischen Aufhellungsvorgangs vor dem Bilden der Anodisierungsschicht.

8. Verfahren nach Anspruch 1, wobei die Vertiefungen Durchmesser zwischen 20 Mikrometer und 25 Mikrometer aufweisen.

9. Elektronische Vorrichtung, die ein Gehäuse aufweist, wobei das Gehäuse umfasst: ein Metallsubstrat, das eine strukturierte Oberfläche aufweist, die beinhaltet (i) einen geschmolzenen Abschnitt, der ein erstes Lichtreflexionsvermögen aufweist, und (ii) einen nicht-geschmolzenen Abschnitt, der ein zweites Lichtreflexionsvermögen aufweist, das sich von dem ersten Lichtreflexionsvermögen unterscheidet, wobei der geschmolzene Abschnitt, der durch Ausrichten eines Lasers auf das Metallsubstrat erzeugt wird, eine erste Kornstruktur aufweist und der nicht-geschmolzene Abschnitt eine zweite Kornstruktur aufweist, die sich von der ersten Kornstruktur unterscheidet; und
eine Anodisierungsschicht, die die strukturierte Oberfläche des Metallsubstrats überlagert, wobei die Anodisierungsschicht eine polierte Oberfläche aufweist und die Anodisierungsschicht einen ersten Anodisierungsschichtabschnitt, der den geschmolzenen Abschnitt überlagert und aus der ersten Kornstruktur gebildet ist, und einen zweiten Anodisierungsschichtabschnitt beinhaltet, der den nicht-geschmolzenen Abschnitt überlagert und aus der zweiten Kornstruktur gebildet ist.

10. Elektronische Vorrichtung nach Anspruch 9, wobei die Anodisierungsschicht ausreichend transparent ist, so dass die strukturierte Oberfläche durch die polierte Oberfläche sichtbar ist.

11. Elektronische Vorrichtung nach Anspruch 10, wobei der geschmolzene Abschnitt ein Muster aus einer Reihe von Vertiefungen beinhaltet.

12. Elektronische Vorrichtung nach Anspruch 11, wobei die Reihe von Vertiefungen in einem Muster über den geschmolzenen Abschnitt geätzt ist.

## Revendications

1. Un procédé de traitement d'une surface métallique d'un article, le procédé comprenant :
la réception de l'article, la surface métallique de l'article présentant une première réflectivité ;
la formation d'une surface texturée qui comprend une partie fondue et une partie non fondue par utilisation d'un laser pour faire fondre une partie de la surface métallique, la partie fondue comprenant un motif contrôlé d'alvéoles et présentant une seconde réflectivité lumineuse différente d'une première réflectivité lumineuse de la partie non fondue, la partie non fondue présentant une première structure de grain et la partie fondue présentant une seconde structure de grain différente de la première structure de grain ; et
la formation d'une couche d'anodisation qui recouvre la partie fondue et la partie non fondue, la couche d'anodisation étant sensiblement transparente de telle sorte que la surface texturée soit visible au travers d'une surface externe de la couche d'anodisation, et la couche d'anodisation comprenant (i) une première partie de couche d'anodisation qui est formée à partir de la première structure de grain et recouvre la partie non fondue, et (ii) une seconde partie de couche d'anodisation qui est formée à partir de la seconde structure de grain et recouvre la partie fondue.

2. Le procédé de la revendication 1, dans lequel le procédé comprend en outre, avant la formation de la surface texturée :
le soufflage de la surface métallique par entraînement d'un flux de matériau abrasif contre la surface métallique.

3. Le procédé de la revendication 2, dans lequel le motif contrôlé d'alvéoles est en un motif répétitif.

4. Le procédé de la revendication 1, dans lequel le procédé comprend en outre, à la suite de la formation de la couche d'anodisation :
le polissage d'une surface externe de la couche d'anodisation.

5. Le procédé de la revendication 1, dans lequel la formation de la surface texturée comprend l'utilisation du laser seulement le long d'une partie de la surface métallique.

6. Le procédé de la revendication 1, dans lequel les alvéoles sont distribués uniformément les uns par rapport aux autres.

7. Le procédé de la revendication 1, comprenant en outre l'éclaircissement de la surface texturée par exécution d'une opération d'éclaircissement chimique avant la formation de la couche d'anodisation.

8. Le procédé de la revendication 1, dans lequel les alvéoles ont des diamètres compris entre 20 micromètres et 25 micromètres.

9. Un dispositif électronique comprenant un boîtier, le boîtier comprenant :
un substrat métallique avec une surface texturée qui comprend (i) une partie fondue présentant une première réflectivité lumineuse, et (ii) une partie non fondue présentant une seconde réflectivité lumineuse différente de la première réflectivité lumineuse, la partie fondue, créée en dirigeant un laser sur le substrat métallique, présentant une première structure de grain et la partie non fondue présentant une seconde structure de grain différente de la première structure de grain ; et
une couche d'anodisation qui recouvre la surface texturée du substrat métallique, la couche d'anodisation ayant une surface polie, et la couche d'anodisation comprenant une première partie de couche d'anodisation qui recouvre la partie fondue et qui est formée à partir de la première structure de grain, et une seconde partie de couche d'anodisation qui recouvre la partie non fondue et qui est formée à partir de la seconde structure de grain.

10. Le dispositif électronique de la revendication 9, dans lequel la couche d'anodisation est suffisamment transparente pour que la surface texturée soit visible au travers de la surface polie.

11. Le dispositif électronique de la revendication 10, dans lequel la partie fondue comprend un motif d'une série d'alvéoles.

12. Le dispositif électronique de la revendication 11, dans lequel la série d'alvéoles sont gravés en un motif sur l'étendue de la partie fondue.
